(19) Europäisches Patentamt
European Patent Office
Office européen des brevets

(11) **EP 2 917 614 B1**

(12) **EUROPÄISCHE PATENTSCHRIFT**

(45) Veröffentlichungstag und Bekanntmachung des Hinweises auf die Patenterteilung:
**26.10.2016 Patentblatt 2016/43**

(21) Anmeldenummer: **13766301.9**

(22) Anmeldetag: **24.09.2013**

(51) Int Cl.:
***F16J 9/20*** *(2006.01)*

(86) Internationale Anmeldenummer:
**PCT/EP2013/069764**

(87) Internationale Veröffentlichungsnummer:
**WO 2014/072115 (15.05.2014 Gazette 2014/20)**

(54) **KOLBENRING MIT EINER PERIODISCH VARIIERENDEN NUT**

PISTON RING WITH A PERIODICALLY VARYING GROOVE

SEGMENT DE PISTON POURVU D'UNE GORGE VARIANT PÉRIODIQUEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2012 DE 102012220471**

(43) Veröffentlichungstag der Anmeldung:
**16.09.2015 Patentblatt 2015/38**

(73) Patentinhaber: **Federal-Mogul Burscheid GmbH 51399 Burscheid (DE)**

(72) Erfinder:
• **MITTLER, Richard 51399 Burscheid (DE)**
• **NATHEM, Frank 86415 Mering (DE)**

(74) Vertreter: **Becker Kurig Straus Patentanwälte Bavariastrasse 7 80336 München (DE)**

(56) Entgegenhaltungen:
**DE-A1-102009 036 240 US-A- 1 755 402 US-A- 2 131 970 US-A- 2 554 289**

**Beschreibung**

Die vorliegende Erfindung betrifft einen Kolbenring für einen Verbrennungsmotor bzw. für einen Kompressor, insbesondere einen Kolbenring mit einer auf der Lauffläche angeordneten einer Nut in Umfangsrichtung periodisch variierender Breite und variierender variabler Tiefe.

Moderne, großvolumige Motoren für Schiffe sind nach wie vor Zweitakt-Dieselmotoren, da diese Art von Motoren so konstruiert werden können, dass deren Drehzahl typischerweise in einem Bereich von ungefähr 50 U/min bis zu 250 U/min (typischerweise unter 100 U/min) liegt und deren Leistung je nach Zahl der Zylinder bis zu ungefähr 100 MW erreichten kann. Derartige großvolumige, langsam laufende Zweitakt-Schiffmotoren wirken bevorzugt unmittelbar auf die Antriebswelle(n) des/der Propeller(s), da aufgrund ihrer Drehzahl auf ein Untersetzungsgetriebe zur Drehzahlreduzierung verzichtet werden kann.

Typischerweise haben derartige großvolumige, Zweitakt-Motoren zwei getrennte Ölkreisläufe, einen für die Motorschmierung und einen für die Zylinderschmierung. Die Zylinderschmierung stellt sicher, dass zu einem geeigneten Zeitpunkt genug Schmieröl zur Verfügung gestellt wird, um eine ausreichende Schmierung der Zylinderoberflächen bzw. der Kolbenringe zu gewährleisten.

Das Zylinderschmieröl wird, abhängig von der Last der Maschine, durch die Laufbuchse in den Kolbenraum eingespritzt. Auf diesem Schmierfilm, dem Tragspiegel, laufen die Kolbenringe. Dabei kommt es unter anderem darauf an, so wenig Schmieröl wie möglich einzuspritzen, um Kosten zu sparen und eine Überschmierung zu verhindern. Die Zylinderschmierung erfolgt beispielsweise im oberen Hub-Drittel, indem Schmieröl durch eine Schmierölpumpe durch Schmieröleinlässe, die beispielsweise in einer Ebene in der Zylinderwand vorgesehen sind, in den Zylinder zugeführt wird, so dass die Schmierung des Kolbens und des Kolbenringes möglichst optimal gewährleistet wird. Die Ölzufuhr in die Zylinder erfolgt üblicherweise im Gasgegendruckverfahren.

Beispielsweise kann ein Schmieröleinspritzsystem eingesetzt werden, das Schmieröl genau dosiert über Düsen in die Zylinder eingespritzt. Eine computergesteuerte Anlage registriert, in welcher Position sich ein Kolben befindet und führt dann gezielt Schmieröl zu. Dies geschieht mit hohem Druck, so dass das Schmieröl sehr fein versprüht wird, um eine möglichst gleichmäßige Benetzung der Zylinderlaufbuchse zu erhalten, gezielt aber dort, wo sich die Kolbenringe befinden und wo die Reibung tatsächlich stattfindet.

Berücksichtigt man, dass moderne, großvolumige Zweitakt-Schiffmotoren mit einer Drehzahl von ungefähr 50 U/min bis zu 250 U/min bei einem Hub von bis zu 2500 mm betrieben werden, ist die Zeitspanne, die für die Zufuhr des Schmieröls und die Verteilung des zugeführten Schmieröls zur Verfügung steht, gering bemessen und stellt große Herausforderungen an die Sicherstellung der Qualität der Schmierung. Nimmt man beispielsweise an, dass ein Zylinder einen (Innen-) Durchmesser von 900 mm aufweist und 8 über den Umfang gleichverteilte Zugänge für die Ölzufuhr in der Zylinderwand vorgesehen sind, muss sich das zugeführte Schmieröl ausgehend von den jeweiligen Zugängen in der bereitgestellten Zeitspanne über eine Länge von ca. 350 mm in Umfangsrichtung verteilen.

Es zeigt sich, dass bei konventioneller Gestaltung des einen oder mehrerer Kolbenringe aufgrund fehlender Druckgradienten in Umfangsrichtung keine bzw. lediglich eine sehr geringe Verteilung des Schmieröls in Umfangsrichtung (maximal ca. 3%) erhalten wird.

Ein Kolbenring gemäß dem Oberbegriff des Anspruchs 1 ist z.B. aus DE 10 2009 036 240 A1 bekannt.

Einsatzgebiet der vorliegenden Erfindung sind Verbrennungsmotoren allgemein, auch außerhalb des Schiffseinsatzes.

Aufgabe der vorliegenden Erfindung ist es, einen Kolbenring bereitzustellen, der bei ausreichenden Schmierverhältnissen sowohl einen niedrigen Ölverbrauch und einen geringeren Leckgasdurchlass (Blow-By) gewährleistet als auch günstig herstellbar ist.

Die Lösung dieses Problems erfolgt durch einen Kolbenring mit den Merkmalen gemäß Anspruch 1.

Erfindungsgemäß ist eine Nut auf der Lauffläche eines Kolbenringes zwischen zwei im Wesentlichen konvex ballig ausgebildeten Laufflächenanschnitten angeordnet. Die Nut weist in Umfangsrichtung einen periodisch variierenden Tiefenverlauf und einen periodisch variierenden Breitenverlauf auf.

Die derart ausgebildete Lauffläche des Kolbenringes kann Schmieröl in einem Hohlraum aufnehmen, der durch die Nut und eine Gegenlauffläche gebildet wird. Der periodisch variierende Tiefenverlauf und der periodisch variierende Breitenverlauf der Nut bewirkt, dass sich im laufenden Betrieb hydrodynamische Drücke (insbesondere mit Tiefenverlauf bzw. dem Breitenverlauf periodisch variierend) in der Umfangsrichtung aufbauen bzw. auftreten. Diese hydrodynamische Drücke haben Druckgradienten zu Folge, die Schmierölflüsse veranlassen und eine Umverteilung des Schmieröls vermögen. Die hydrodynamisch bewirkte Umverteilung des Schmieröls führt zu einer Reduzierung der erforderlichen Menge und einer bezüglich der Umfangsrichtung gleichmäßigeren Verteilung des in die Nut zugeführten oder eingespritzten Schmieröls.

Somit wird wie gewünscht ein auf den Umfang bezogen gleichmäßiger Tragspiegel aus Schmieröl erhalten, um ausreichende Schmierverhältnisse zu gewährleisten, möglichst gleichmäßig gegen Leckgasdurchlass (Blow-By) abzudichten (bzw. einen möglich geringen Leckgasdurchlass (Blow-By) zu erhalten), das Schmieröl in Arbeitsrichtung des Kolbes effektiv abstreifen zu können und ein Überlaufen zu ermöglichen.

Vorteilhafte Ausgestaltungen nach der vorliegenden Erfindung sind in den Unteransprüchen enthalten.

Die Erfindung wird nachfolgend anhand der in den Zeichnungen dargestellten Ausführungsbeispiele näher erläutert, wobei

| | |
|---|---|
| Figuren 1(a) und 1(b) | einen ersten (radialen) Querschnitt und einen zweiten (radialen) Querschnitt durch einen Kolbenring gemäß einer Ausführungsform der vorliegenden Erfindung zeigen; |
| Figur 2(a) | eine Aufsicht auf einen Ausschnitt der in Umfangsrichtung verlaufenden Lauffläche des Kolbenringes gemäß dem in Figur 1 gezeigten erfindungsgemäßen Kolbenring zeigt; |
| Figur 2(b) und 2(c) | einen Verlauf des Tiefenprofils bzw. der Tiefe der in der Lauffläche angeordneten Nut entsprechend dem in Figur 2(a) gezeigten Ausschnitt der in Umfangsrichtung verlaufenden Lauffläche des Kolbenringes zeigt; |
| Figur 2(d) | einen Verlauf der Breite der in der Lauffläche angeordneten Nut entsprechend dem in Figur 2(a) gezeigten Ausschnitt der in Umfangsrichtung verlaufenden Lauffläche des Kolbenringes zeigt; |
| Figur 3(a) und (b) | perspektivische Ausschnittsansichten und Querschnittsansichten eines Kolbenringes einer weiteren, erfindungsgemäßen Ausführungsform zeigen; und |
| Figuren 4(a) und 4(b) | beispielhafte funktional beschriebene Verläufe der Nut bzw. deren Tiefe und Breite gemäß einer weiteren Ausführungsform der vorliegenden Erfindung zeigen. |

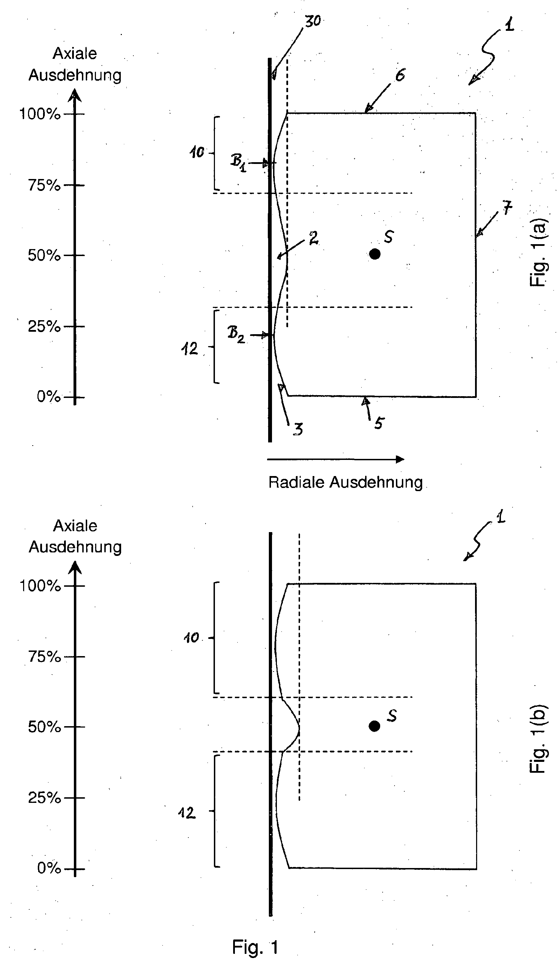

Figur 1 zeigt zwei voneinander in Umfangsrichtung beabstandete (radiale) Querschnitte durch einen erfindungsgemäßen Kolbenring 1. Der in Figur 1 gezeigte erfindungsgemäßer bevorzugt gleichzeitig als Verdichtungs- und Ölabstreifring wirkender Kolbenring 1 mit Nut weist auf seiner äußeren, dem Verbrennungsraum abgekehrten, profilierten Seite, d.h. auf der profilierten Lauffläche 3 des Kolbenringes 1, eine Aussparung bzw. Nut 2 auf, die in Fig. 1 schematisch illustriert ist. Der Kolbenring 1 weist ferner eine dem Brennraum 31 zugewandte Flanke 5, eine dem Ölraum 32 zugewandte Flanke 6 und eine innenseitige Umfangsfläche 7 auf.

Es soll bemerkt werden, dass, obgleich die vorstehende und nachfolgende Beschreibung Bezug auf die Verwendung des erfindungsgemäßen Kolbenringes 1 für einen Kolben in einem Verbrennungsmotor, insbesondere in einem Zweitakt-Verbrennungsmotor, nimmt, vom Fachmann unmittelbar verstanden wird, dass ein Kolbenring gemäß einer erfindungsgemäßen Ausführungsform auch in Kompressoren Anwendung finden kann.

Die Lauffläche 3 weist ein Profil auf, das in zwei Abschnitte unterteilt ist. Der erste Abschnitt 10 des Laufflächenprofils ist im Wesentlichen konvex ballig ausgebildet und der zweite Abschnitt 12 ist ebenso im Wesentlichen konvex ballig ausgebildet. Die zwei konvex ballig ausgebildeten Abschnitte 10, 12 haben jeweils im Querschnitt einen Scheitelpunkt B1, B2 bzw. jeweils eine entlang des äußeren Umgangs verlaufende Scheitelpunktlinie 11, 13.

Die Laufflächenprofile der zwei konvex balligen Abschnitte 10, 12 sind bevorzugt symmetrisch (spiegelsymmetrisch) bezüglich der Mittelebene des Kolbenringes 1 ausgebildet wie in den Figuren 1(a) und 1(b) dargestellt. Es soll jedoch verstanden werden, dass die vorliegende Erfindung nicht auf eine symmetrische Ausbildung der zwei konvex balligen Abschnitte 10, 12 beschränkt ist, sondern dass die Laufflächenprofile der zwei konvex balligen Abschnitte 10, 12 symmetrisch (spiegelsymmetrisch) bezüglich einer zur Mittelebene parallelen Ebene oder asymmetrisch geformt sein können.

Der erste konvex ballig ausgebildete Abschnitt 10 des Laufflächenprofils ist bevorzugt in einem Bereich von 0% bis 33% der axialen Ausdehnung der Lauffläche 3 des Kolbenringes 1 geformt und der Scheitelpunkt B1 des ersten konvex ballig ausgebildeten Abschnitts 10 liegt ferner bevorzugt im Wesentlichen bei ungefähr 25%±5% der axialen Ausdehnung der Lauffläche 3 des Kolbenringes 1.

Der zweite konvex ballig ausgebildete Abschnitt 12 des Laufflächenprofils ist bevorzugt in einem Bereich von 66% bis 100% der axialen Ausdehnung der Lauffläche 3 des Kolbenringes 1 geformt und der Scheitelpunkt B1 des ersten konvex ballig ausgebildeten Abschnitts 10 liegt ferner bevorzugt im Wesentlichen bei ungefähr 75%±5% der axialen Ausdehnung der Lauffläche 3 des Kolbenringes 1.

Im Bereich der in Umfangsrichtung verlaufenden Scheitelpunktlinien 11, 13 dichtet der Kolbenring 1 gegenüber einer Gegenlauffläche 30 wie z.B. einer Zylinderlaufbuchse gegen Gasdurchlass aus dem Brennraum 31. Durch Kolbenbewegung bildet sich zwischen dem Kolbenring 1 und der Gegenlauffläche 30 ein hydrodynamischer Ölfilm aus, der sich aufgrund der Kolbenbewegung zwischen dem Kolbenring 1 und der und Gegenlauffläche 30 ausbildet und der für eine ausreichende Schmierung zwischen diesen sorgt. In den Querschnittsansichten sind die in Umfangsrichtung verlaufenden Scheitelpunktlinien 11, 13 als Scheitelpunkte B1, B2 dargestellt.

Zwischen den konvex ballig ausgebildeten Abschnitte 10, 12 erstreckt sich eine Aussparung bzw. Nut 2. Die Nut 2 weist eine in Umfangsrichtung variierende Breite B und eine in Umfangsrichtung variierende Tiefe T auf. In Fig. 1(a) ist ein erster (radialer) Querschnitt durch die Nut 2 mit einer maximalen Breite $B_{max}$ und einer minimalen Tiefe $T_{min}$ schematisch dargestellt und in Fig. 1(b) ist ein zweiter (radialer) Querschnitt durch die Nut 2 mit einer minimalen Breite $B_{min}$ und einer maximalen Tiefe $T_{max}$ schematisch dargestellt.

Es soll bemerkt werden, dass die Aussparung bzw. Nut 2 vorgesehen ist, Schmieröl aufzunehmen. Die variierende Tiefe T und die variierende Breite B der Nut 2 sind derart ausgelegt, dass aufgrund im Betrieb des Kolbens auftretender hydrodynamischer Drücke und daraus resultierender Druckgradienten ein bevorzugt gleichmäßiger Fluss des in der Nut befindlichen Schmieröls in Umfangsrichtung erhalten wird. Insbesondere die durch den variierenden Tiefenverlauf abwechselnd gebildeten Berge (geringere bzw. minimale Tiefe) und Täler (größere bzw. maximale Tiefe) in Umfangsrichtung bewirken die hydrodynamischen Drücke bzw. Druckgradienten und stellen einen gleichmäßigen Schmierölfluss sicher.

Es soll ferner bemerkt werden, dass der erfindungsgemäße Kolbenring 1 einstückig ist. Das heißt, dass die Nut 2 in dem Kolbenring 1 eine maximale Tiefe $T_{max}$ hat, die geringer als die radiale Ausdehnung des Kolbenringes 1 ist, so dass kein Durchtritt von Schmieröl durch den Kolbenring 1 in Richtung auf die innenseitige Umfangsfläche 7 ermöglicht wird.

Der Flächenschwerpunkt S des Querschnitts des Kolbenringes 1 liegt in einer Ebene zwischen den beiden Scheitelpunkten B1 und B2 bezüglich der axialen Ausdehnung der Lauffläche 3 des Kolbenringes 1. Hierdurch wird sichergestellt, dass der Kolbenring 1 im statischen Zustand mit den beiden Scheitelpunkten B1 und B2 an der Gegenlauffläche 30 anliegt bzw. eventuell durch einen dünnen, dazwischen liegenden Ölfilm (nicht gezeigt) davon minimal beabstandet ist.

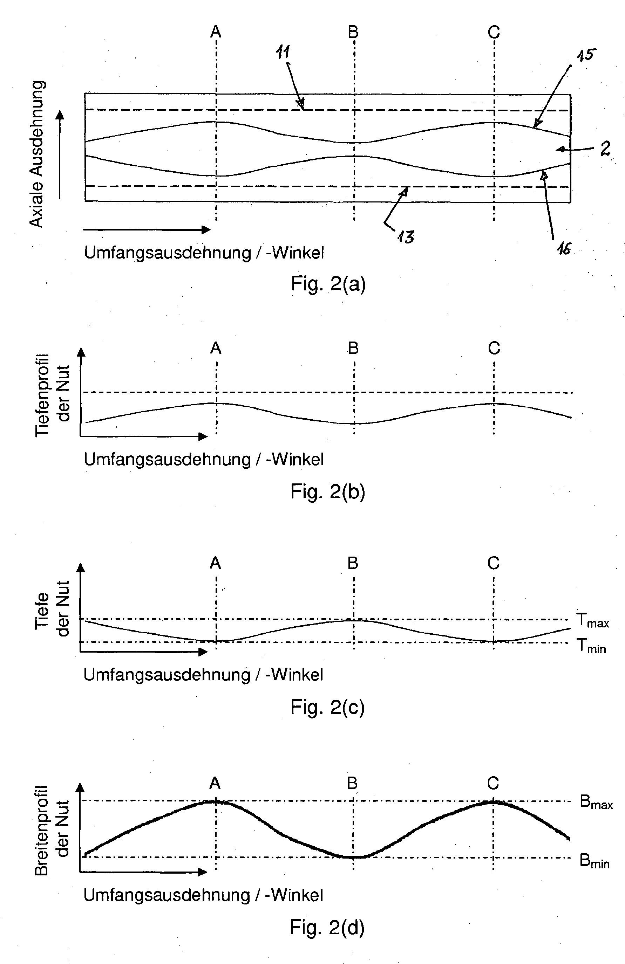

Figur 2(a) zeigt eine Aufsicht auf einen Ausschnitt der in Umfangsrichtung verlaufenden Lauffläche 3 des erfindungsgemäßen Kolbenringes 1. In dem gezeigten Ausschnitt der Lauffläche 3 sind der Breitenverlauf der Nut 2 und die zwei Scheitelpunktlinien 11, 13 schematisch dargestellt. Die Breite B der Nut 2 variiert zwischen einer maximalen Breite $B_{max}$ und einer minimalen Breite $B_{min}$. An den Umfangspositionen A und C weist die Nut 2 die maximale Breite $B_{max}$ auf während an der Umfangsposition B die Nut 2 die minimale Breite $B_{min}$ aufweist.

Die Nut 2 ist in Figur 2(a) anhand zweier die Nut begrenzender, äußerer Grenzlinien 15 und 16 angedeutet, mit Hilfe deren die Breite der Nut 2 bestimmt werden kann. In Figur 2(a) sind ferner Schnittpositionen A, B und C angezeigt. Die in Figur 1(a) illustrierte Querschnittsansicht wird bei einem Schnitt an der Position A bzw. C erhalten, während die in Figur 1(b) illustrierte Querschnittsansicht bei einem Schnitt an der Position B erhalten wird.

Figuren 2(b) und 2(c) zeigen das Tiefenprofil bzw. den Verlauf der Tiefe T der Nut 2 entsprechend dem in Figur 2(a) gezeigten Ausschnitt der Lauffläche 3 mit der Nut 2. Die Tiefe T der Nut 2 variiert zwischen einer minimalen Tiefe $T_{min}$ und einer maximalen Tiefe $T_{max}$. Der Verlauf der Breite B der Nut 2 und der Verlauf des Tiefenprofils der Nut 2 sind in Phase. Das heißt, dass wenn die Nut 2 die maximale Breite $B_{max}$ aufweist, die Nut 2 mit minimaler Tiefe $T_{min}$ ausgebildet ist und, wenn die Nut 2 die minimale Breite $B_{min}$ aufweist, die Nut 2 mit maximale Tiefe $T_{max}$ ausgebildet ist. In dem in Figur 2(b) gezeigten Tiefenprofilverlauf sind die Umfangspositionen A, B und C entsprechend gezeigt und illustrieren den In-Phasen-Verlauf der Breite und des Tiefenprofils der Nut 2.

Figur 2(d) zeigt eine Aussicht auf die Ebene des Kolbenringes 1. Die in den Figuren 2(a), 2(b) bzw. 2(c) dargestellten Umfangspositionen bzw. Schnittpositionen A, B und C sind in der Kolbenringebene gezeigt. Die Breite und die Tiefe der Nut 2 in der Lauffläche 3 des Kolbenringes 1 variieren periodisch entlang des äußeren Umfanges des Kolbenringes 1. In Figur 2(d) ist eine Periodizität von 6 beispielhaft illustriert. Das heißt, dass der Periodenwinkel bezüglich des Kolbenringumfangs in der illustrierten beispielhaften Ausführungsform $\varphi = 60°$ beträgt. Vorzugsweise liegen die Perioden der Variationen der Breite B und der Tiefe T der Nut 2 in einem Bereich von einschließlich 4 ($\varphi = 90°$) bis einschließlich 36 ($\varphi = 10°$). Die Perioden sind vorzugsweise ganzzahlig und insbesondere gleich.

Es soll bemerkt werden, dass die Zahl der Perioden für die Tiefe bzw. die Breite der Nut 2 an die Zahl der Durchlasszugänge bzw. Düsen angepasst werden kann, durch die das Schmieröl beispielsweise im Gasgegendruckverfahren in den Zylinder eingedrückt bzw. eingespritzt wird. So kann beispielsweise die Zahl der Perioden gleich der Zahl der Durchlasszugänge bzw. Düsen oder aber auch ein ganzzahliges Vielfaches davon sein.

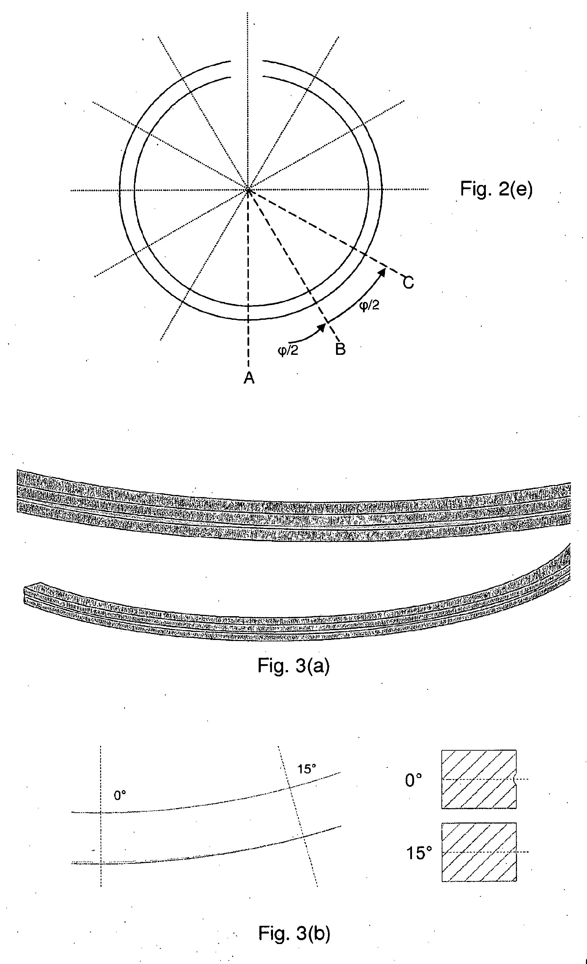

Eine weitere beispielhafte, erfindungsgemäße Ausführungsform des Kolbenringes 1 ist in den Figuren 3(a) und 3(b) gezeigt. Die Periodenwinkel ist in diesem Beispiel $\varphi = 30°$.

Die Nut 2 kann symmetrische, d.h. spiegelsymmetrisch wie in den Figuren 1 und 2 gezeigt geformt sein oder auch asymmetrisch bezüglich der Mittelebene des Kolbenringes 1 ausgebildet sein (nicht gezeigt). Die Nut 2 verläuft im Wesentlichen mittig, d.h. die Nut verläuft im Wesentlichen mittig bezüglich der axialen Ausdehnung des Kolbenringes 1 bzw. bezüglich der Mittelebene des Kolbenringes 1 wie in den Figuren 1 und 2 (bei im Wesentlichen 50 % der axialen Ausdehnung) gezeigt. Alternative kann die Nut 2 jedoch auch außerhalb der Mittelebene des Kolbenringes 1 angeordnet sein.

Bevorzugt liegen die Scheitelpunktlinien 11 und 13 im Wesentlichen auf Kreisen, deren Ebenen parallel zu der Ebene des Kolbenringes 1 ist; vgl. hierzu Figur 2(a). Alternativ kann jedoch auch mindestens eine der Scheitelpunktlinien 11 und 13 dem Verlauf der Breite der Nut 2 beanstandet oder identisch folgen. So können beispielsweise die Scheitelpunktlinien 11 und 13 identisch mit den äußeren Grenzlinien 15 und 16 der Nut 2 sein. Das heißt, dass die Breite der Nut 2 durch den Abstand der Scheitelpuhktlinie 11 und 13 der zwei Abschnitts 10 oder 12 bestimmt ist.

Die Breite B und die Tiefe T der Nut 2 sind bevorzugt stetig und können ferner bevorzugt durch jeweils periodische, stetige Funktionen beschrieben werden. Insbesondere sind die Breite B und die Tiefe T der Nut 2 durch jeweils periodische, differenzierbare Funktionen beschreibbar. Das heißt, dass beispielsweise die Grenzlinien 15 und 16 durch Winkelfunktionen beschrieben werden kann, wie beispielsweise als Funktion des Umfangwinkels $\varphi$ und der Zahl der Perioden k:

$$F_1(\varphi) = + \frac{B_{max} - B_{min}}{4} \cdot \cos(k \cdot \varphi)$$

$$F_2(\varphi) = - \frac{B_{max} - B_{min}}{4} \cdot \cos(k \cdot \varphi) + \frac{B_{max} + B_{min}}{2}$$

Die Breite B und die Tiefe der Nut 2 kann wie folgt ebenso durch Winkelfunktionen ausgedrückt werden, wie beispielsweise:

$$B(\varphi) = F_2(\varphi) - F_1(\varphi) = - \frac{B_{max} - B_{min}}{2} \cdot \cos(k \cdot \varphi) + \frac{B_{max} + B_{min}}{2}$$

$$T(\varphi) = \frac{T_{max} - T_{min}}{2} \cdot \cos(k \cdot \varphi) + \frac{T_{max} + T_{min}}{2}$$

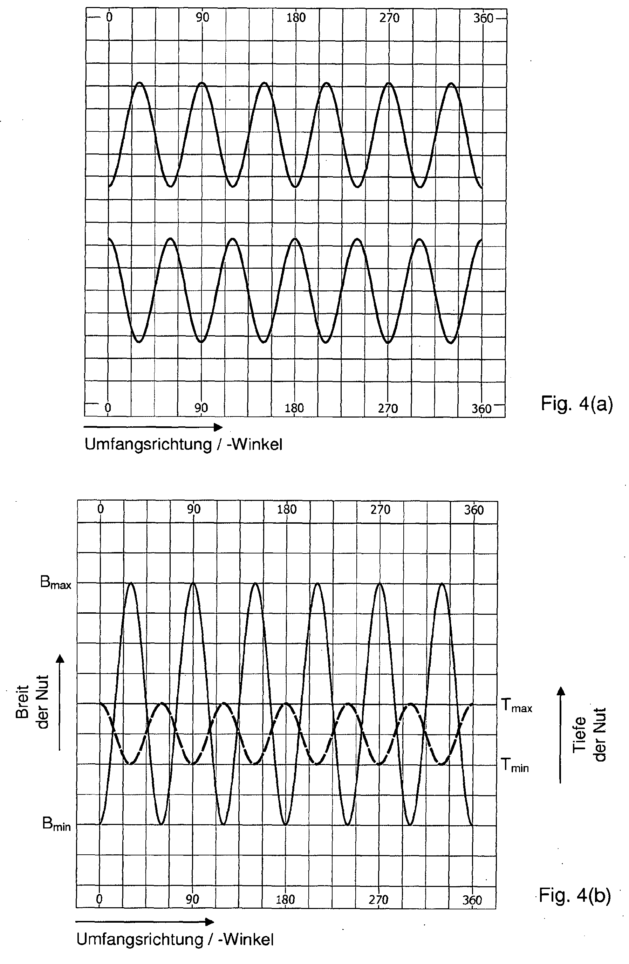

In den Figuren 4(a) und 4(b) sind obige beispielhafte Funktionen zum besseren Verständnis dargestellt.
Der in der vorliegenden Anmeldung vorgeschlagene Kolbenring ist insbesondere für Kolben in einem System mit einem Durchmesser von größer als 400 mm.
Ein gemäß der vorliegenden Erfindung ausgebildeter Kolbenring kann vorzugsweise bei Kolben für Verbrennungsmotoren wie z.B. großvolumige Zweitakt-Verbrennungsmotoren oder Kompressoren in eine Kolbenringnut eingesetzt werden. Hierbei hat es sich gezeigt, dass einerseits der Ölverbrauch und andererseits der Leckgasdurchlass (Blow-By) gegenüber bekannten Ausführungen erheblich reduziert werden konnte. Es ist daher festzustellen, dass mit einem erfindungsgemäßen Kolbenring auf konstruktiv und herstellungsmäßig ein Kolbenring für Kolben eines Verbrennungsmotors oder Kompressors geschaffen wird, der hervorragende Ergebnisse bezüglich Leckgasdurchlass und Ölverbrauch bei sichergestellten Schmierverhältnissen erzielt.
Gemäß einem weiteren Aspekt der Erfindung soll vorgesehen sein, dass die Nut eine periodisch variierende Position aufweist.
Vorgesehen sind gemäß einem Ausführungsbeispiel die physikalischen Werte : 600 mm Ring, Nutbreite 1-3 mm (axiale Höhe 16mm), Nuttiefe 0,2-0,7 mm (radiale Wandstärke 19,5 mm).

Bezugszeichen

1:  ein Kolbenring
2:  eine Aussparung bzw. Nut
3:  eine Lauffläche des Kolbenringes (die äußere, dem Verbrennungsraum abgekehrte Seite) bzw. eine außenseitige Umfangsfläche

5:  eine dem Brennraum zugewandte Flanke
6:  eine dem Ölraum zugewandte Flanke
7:  eine innenseitige Umfangsfläche

10:  ein erster konvex ballig ausgebildeter Abschnitt des Laufflächenprofils

11:    eine erste Scheitelpunktlinie
B1:    ein Scheitelpunkt der ersten Scheitelpunktlinie
12:    ein zweiter konvex ballig ausgebildeter Abschnitt des Laufflächenprofils
13:    eine zweite Scheitelpunktlinie
B2:    ein Scheitelpunkt der zweiten Scheitelpunktlinie

S:    Schwerpunkt

20:    ein Anlagepunkt des ersten Scheitelpunktes bzw. der ersten Scheitelpunktlinie
21:    ein Anlagepunkt des zweiten Scheitelpunktes bzw. der zweiten Scheitelpunktlinie

15:    erste Grenzlinie der Nut
16:    zweite Grenzlinie der Nut

30:    eine Gegenlauffläche z.B. Zylinderlaufbuche
31:    ein Brennraum
32:    ein Ölraum

T:    (periodisch variierende) Tiefe der Aussparung bzw. Nut
B:    (periodisch variierende) Breite der Aussparung bzw. Nut


**Patentansprüche**

**1.**    Kolbenring mit einer außenseitigen Lauffläche (3), zwei Flanken (5, 6) und einer innenseitigen Umfangsfläche (7), wobei die Lauffläche (3) eine Profilierung mit einer Nut (2) aufweist,
die Nut (2) bezüglich des Querschnitts des Kolbenringes (1) zwischen zwei Laufflächenabschnitten (10, 12) angeordnet ist,
wobei die zwei Laufflächenabschnitte (10, 12) voneinander beabstandet und im Wesentlichen konvex ballig ausgebildet sind und jeweils einen Scheitelpunkt (B1, B2) aufweisen,
**dadurch gekennzeichnet, dass**
die Nut (2) eine periodisch variierende Tiefe (T) und eine periodisch variierende Breite (B) aufweist, und
die Zahl der Perioden des Verlaufs der Tiefe (T) und die Zahl der Perioden des Verlaufs der Breite (B) gleich sind.

**2.**    Kolbenring nach Anspruch 1, **dadurch gekennzeichnet, dass**
die Zahl der Perioden des Tiefenverlaufs und die Zahl der Perioden des Breitenverlaufs ganzzahlig sind.

**3.**    Kolbenring nach Anspruch 1 oder 2, **dadurch gekennzeichnet, dass** die Nut (2) bei maximaler Tiefe ($T_{max}$) minimale Breite ($B_{min}$) und bei minimaler Tiefe ($T_{min}$) maximale Breite ($B_{max}$) aufweist.

**4.**    Kolbenring nach einem der Ansprüche 1 bis 3, **dadurch gekennzeichnet, dass** die Mitte der Nut (2) im Wesentlichen mittig bezüglich der Scheitelpunktlinien (B1, B2, 11, 13) der zwei Laufflächenabschnitte (10, 12) sind und insbesondere mittig bezüglich der axialen Ausdehnung des Kolbenringes (1) verläuft.

**5.**    Kolbenring nach einem der Ansprüche 1 bis 4, **dadurch gekennzeichnet, dass** die zwei im Wesentlichen konvex ballig Laufflächenbereichen symmetrisch bezüglich der axialen Ausdehnung des Kolbenringes (1) angeordnet sind.

**6.**    Kolbenring nach einem der Ansprüche 1 bis 5, **dadurch gekennzeichnet, dass** die Nut (2) in der Aufsicht auf die Lauffläche (3) des Kolbenringes (1) im Wesentlichen symmetrisch ausgebildet ist.

**7.**    Kolbenring nach einem der Ansprüche 1 bis 5, **dadurch gekennzeichnet, dass** die Nut (2) in der Aufsicht auf die Lauffläche (3) des Kolbenringes (1) im Wesentlichen asymmetrisch ausgebildet ist.

**8.**    Kolbenring nach einem der Ansprüche 1 bis 7, **dadurch gekennzeichnet, dass** die Nut (2) in der Lauffläche des Kolbenringes (1) im Wesentlichen konkav ausgebildet ist.

**9.**    Kolbenring nach einem der Ansprüche 1 bis 8, **dadurch gekennzeichnet, dass** die Scheitelpunkte (B1, B2) der zwei Laufflächenabschnitte (10, 12) im Wesentlichen in der gleichen radialen Ebene parallel zu der Ebene einer Gegenlauffläche (30) liegen.

10. Kolbenring nach einem der Ansprüche 1 bis 9, **dadurch gekennzeichnet, dass** die Zahl der Perioden des Tiefenverlaufs und des Breitenverlaufs in einem Bereich zwischen einschließlich 4 und einschließlich 36 liegt.

**Claims**

1. A piston ring having an outer running face (3), two flanks (5, 6) and an inner circumferential face (7), the running face (3) having profiling with a groove (2),
the groove (2) being arranged between two running face sections (10, 12) in relation to the cross section of the piston ring (1),
the two running face sections (10, 12) being spaced apart from each other and substantially convexly curved and each having an apex (B1, B2),
**characterised in that**
the groove (2) has a periodically varying depth (T) and a periodically varying width (B), and
the number of periods of the course of the depth (T) and the number of periods of the course of the width (B) are equal.

2. The piston ring according to Claim 1, **characterised in that**
the number of periods of the depth course and the number of periods of the width course are integral.

3. The piston ring according to Claim 1 or 2, **characterised in that**
the groove (2) has maximum depth ($T_{max}$) at minimum width ($B_{min}$) and minimum depth ($T_{min}$) at maximum width ($B_{max}$).

4. The piston ring according to any one of Claims 1 to 3, **characterised in that**
the centre of the groove (2) is substantially central in relation to the apex lines (B1, B2, 11, 13) of the two running face sections (10, 12) and in particular runs centrally in relation to the axial extent of the piston ring (1).

5. The piston ring according to any one of Claims 1 to 4, **characterised in that**
the two substantially convexly curved running face regions are arranged symmetrically in relation to the axial extent of the piston ring (1).

6. The piston ring according to any one of Claims 1 to 5, **characterised in that** the groove (2) is substantially symmetrical if the running face (3) of the piston ring (1) is viewed from above.

7. The piston ring according to any one of Claims 1 to 5, **characterised in that**
the groove (2) is substantially asymmetrical if the running face (3) of the piston ring (1) is viewed from above.

8. The piston ring according to any one of Claims 1 to 7, **characterised in that**
the groove (2) is substantially concave in the running face of the piston ring (1).

9. The piston ring according to any one of Claims 1 to 8, **characterised in that**
the apices (B1, B2) of the two running face sections (10, 12) lie substantially in the same radial plane parallel to the plane of a counter running face (30).

10. The piston ring according to any one of Claims 1 to 9, **characterised in that**
the number of periods of the depth course and the width course lies in a range between 4 and 36 inclusive.

**Revendications**

1. Segment de piston avec une surface de roulement (3) extérieure, deux flancs (5, 6) et une surface périphérique (7) intérieure, la surface de roulement (3) comportant un profilage avec une gorge (2),
la gorge (2) étant placée entre deux segments (10, 12) de surface de roulement, en rapport à la section transversale du segment de piston (1),
les deux segments (10, 12) de surface de roulement étant écartés l'un de l'autre et étant conçus sous forme sensiblement bombée convexe et présentant chacun un point culminant (B1, B2),

**caractérisé en ce que**
la gorge (2) présente une profondeur (T) variant périodiquement et une largeur (B) variant périodiquement et le nombre des périodes de variation de la profondeur (T) et le nombre des périodes de variation de la largeur (B) sont identiques.

2. Segment de piston selon la revendication 1,
   **caractérisé en ce que**
   le nombre des périodes de variation de la profondeur et le nombre des périodes de variation de la largeur sont des nombres entiers.

3. Segment de piston selon la revendication 1 ou la revendication 2, **caractérisé en ce qu'**à profondeur maximale ($T_{max}$), la gorge présente une largeur minimale ($B_{min}$) et à profondeur minimale ($T_{min}$), elle présente une largeur maximale($B_{max}$).

4. Segment de piston selon l'une quelconque des revendications 1 à 3, **caractérisé en ce que** le centre de la gorge (2) s'étend sensiblement au centre par rapport aux lignes des points culminants (B1, B2, 11, 13) des deux segments (10, 12) de surface de roulement et s'étend notamment au centre par rapport à l'extension axiale du segment de piston (1).

5. Segment de piston selon l'une quelconque des revendications 1 à 4, **caractérisé en ce que** les deux régions de surface de roulement sensiblement bombées convexes sont placées de manière symétrique par rapport à l'extension axiale du segment de piston (1).

6. Segment de piston selon l'une quelconque des revendications 1 à 5, **caractérisé en ce que**, vue en élévation sur la surface de roulement (3) du segment de piston (1), la gorge (2) est conçue de manière sensiblement symétrique.

7. Segment de piston selon l'une quelconque des revendications 1 à 5, **caractérisé en ce que**, vue en élévation sur la surface de roulement (3) du segment de piston (1), la gorge (2) est conçue de manière sensiblement asymétrique.

8. Segment de piston selon l'une quelconque des revendications 1 à 7, **caractérisé en ce que** la gorge (2) dans la surface de roulement du segment de piston (1) est conçue de forme sensiblement concave.

9. Segment de piston selon l'une quelconque des revendications 1 à 8, **caractérisé en ce que** les points culminants (B1, B2) des deux segments (10, 12) de surface de roulement se situent sensiblement dans le même plan radial, à la parallèle du plan d'une surface de roulement antagoniste (30).

10. Segment de piston selon l'une quelconque des revendications 1 à 9, **caractérisé en ce que** le nombre des périodes de variation de profondeur et de variation de largeur se situe dans un ordre compris entre 4 inclus et 36 inclus.

Fig. 1

Fig. 2(a)

Fig. 2(b)

Fig. 2(c)

Fig. 2(d)

Fig. 2(e)

Fig. 3(a)

Fig. 3(b)

Fig. 4(a)

Umfangsrichtung / -Winkel

Fig. 4(b)

Umfangsrichtung / -Winkel

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009036240 A1